# EUROPÄISCHE PATENTSCHRIFT

(11) **EP 1 623 900 B1**
(45) Veröffentlichungstag und Bekanntmachung des Hinweises auf die Patenterteilung: **14.03.2007**
(21) Anmeldenummer: 05105848.5
(22) Anmeldetag: 30.06.2005
(51) Int. Cl.: B60T 8/36, F16K 31/06, F15B 13/044, G05D 16/20

(54) **Ventilvorrichtung**
Valve device
Dispositif de soupape

(30) Priorität: 07.08.2004 DE 102004038497
(43) Veröffentlichungstag der Anmeldung: 08.02.2006
(73) Patentinhaber: Robert Bosch GmbH, 70442 Stuttgart (DE)
(72) Erfinder: Tischer, Michael, 74232 Abstatt (DE); Schindler, Ralf, 71229 Leonberg (DE); Blumenschein, Peter, 74074 Heilbronn (DE); Heyer, Klaus, 71691 Freiberg (DE); Ambrosi, Massimiliano, 71672 Marbach (DE); Kratzer, Dietmar, 71732 Tamm (DE); Vier, Elmar, 71691 Freiberg A. N. (DE)

(56) Entgegenhaltungen:
- WO-A-01/62566
- WO-A-97/29000

## Beschreibung

### Stand der Technik

Die Erfindung betrifft eine Ventilvorrichtung mit einem längsbeweglichen in einem Ventileinsatz angeordneten und mit einem in einem Ventilkörper ausgebildeten Ventilsitz zusammenwirkenden Ventilelement gemäß der im Oberbegriff des Patentanspruches 1 näher defmierten Art. Eine Ventilvorrichtung mit den Merkmalen des Oberbegriffes des Patentanspruchs 1 ist aus der WO 97/29000 A bekannt.

Eine derartige und als ein elektromagnetisch betätigbares Ventil ausgeführte Ventilvorrichtung mit einem hydraulischen Modul und einem elektromagnetischen Modul bzw. einem elektromagnetischen Aktuator zum Ansteuern der Ventilvorrichtung, die insbesondere in Bremsdruckregelsystemen, wie ABS-(Antiblockiersystem), TCS-(Traktions-Control-System), oder ESP-Systemen (elektronisches Stabilitätsprogramm) einsetzbar ist, ist aus der Praxis bekannt.

Derartige Ventilvorrichtungen weisen einen Ventileinsatz mit einer Längsbohrung, einen mit dem Ventileinsatz verbundenen Ventildom, einen im Ventildom längsbeweglich angeordneten Anker und einen Ventilstößel bzw. ein Ventilelement auf. Das Ventilelement und der Anker stehen derart miteinander in Wirkverbindung, dass eine Ankerbewegung in Schließrichtung eines Ventilsitzes auf das Ventilelement übertragen wird.

Die Ventilvorrichtung wird in stromlosem Zustand durch eine Federeinrichtung bzw. eine Rückstellfeder in geöffnetem Zustand gehalten, um ein Evakuieren und ein Befüllen der Ventilvorrichtung innerhalb eines vordefinierten Zeitraumes gewährleisten zu können. Die als Druckfeder ausgeführte Federeinrichtung ist vorzugsweise im Ventilraum eingebaut, da diese Anordnung der Federeinrichtung eine einfache Montage der Ventilvorrichtung gewährleistet.

Derartige Ventilvorrichtungen werden zur Einstellung eines Systemdrucks in Bremsdruckregelsystemen verwendet, deren Druckbereich sich von nahezu 0 bar bis zu Druckwerten zwischen 150 bar und 200 bar erstreckt. Der jeweils eingestellte Systemdruck entspricht der Druckdifferenz, die sich beim Überströmen der Ventilvorrichtung einstellt.

Die Systemdruckeinstellung bzw. die Systemdruckregelung wird vorzugsweise mittels einer pulsweitenmodulierten Ansteuerung einer vorbeschriebenen Ventilvorrichtung bzw. eines so genannten Umschaltventils durchgeführt, wobei eine Federrate der Federeinrichtung bei solchen Ventilvorrichtungen unterschiedlich hoch vorgesehen sein kann.

Wird der Systemdruck beispielsweise mit einem Umschaltventil eingestellt, dessen Federeinrichtung vorgespannt ist und eine geringe Federrate aufweist, ist eine Regelung des Systemdruckes in einem so genannten Niederdruckbereich, d. h. unterhalb von 10 bar, nicht durchführbar, wobei vorliegend unter dem Begriff "geringe Federraten" Federeinrichtungen zu verstehen sind, deren Federkonstante etwa 10 % des Arbeitkraftbereiches der Ventilvorrichtung entspricht, wobei der Arbeitskraftbereich einer Ventilvorrichtung bei den hier zugrunde liegenden Anwendungsfällen bei etwa 20 N liegt.

Die letztgenannten Ventilvorrichtungen weisen im Niederdruckbereich ein so genanntes Schnappverhalten auf, das nachteilhafterweise im Druckverlauf des Systemdrucks zu Drucksprüngen führt, die unerwünscht sind und eine Regelbarkeit einer Ventilvorrichtung stark beeinträchtigen. Unter dem Begriff Schnappverhalten wird vorliegend unter anderem ein verzögertes Ansprechen der Ventilvorrichtung im Bewegungsverhalten des Ventilelementes ausgehend von einem vollständig geschlossenen Zustand des Ventilsitzes in Öffnungsrichtung des Ventilsitzes verstanden. Das verzögerte Ansprechverhalten der Ventilvorrichtung resultiert aus der Tatsache, dass im Niederdruckbereich, in dem die Ventilvorrichtung mit geringen Steuerspannungen angesteuert wird, erst nach der Überwindung der Vorspannung der Federeinrichtung eine Veränderung der Position des Ventilelementes gegenüber dem Ventilsitz erreicht wird. Dies führt jedoch dazu, dass das Ventilelement seine Position nach dem Überwinden der Vorspannung der Federeinrichtung nicht in der erwünschten Art und Weise im Ventileinsatz verändert, sondern eine zur Erhöhung der Steuerspannung nicht proportionale Lageänderung erfährt, die den vorgenannten Drucksprung anstatt einem angestrebten harmonischen Druckanstieg zur Folge hat.

Die unzureichende Regelbarkeit einer Ventilvorrichtung im Niederdruckbereich, die mit einer vorgespannten Federeinrichtung mit einer geringen Federrate ausgeführt ist, ist durch eine geeignete niederfrequente Ansteuerung des elektromag-netischen Aktuators behebbar. Die niederfrequente Ansteuerung des Aktuators führt jedoch nachteilhafterweise zu einer unerwünschten Geräuschentwicklung im Bremsdruckregelsystem, da die Ansteuerung des Aktuators zu ruckartigen Beschleunigungsvorgängen des im Bremsdruckregelsystem befindlichen Fluids führt.

Sehr gute Regeleigenschaften werden mit pulsweitenmoduliert angesteuerten Umschaltventilen erzielt, wenn diese mit in Einbaulage vorgespannten und so genannten "harten" Rückstellfedern ausgeführt sind. Das bedeutet, dass die Federeinrichtung mit einer vergleichsweise hohen Federrate ausgebildet ist, die etwa 50 % des Arbeitskraftbereiches der Ventilvorrichtung entsprechen.

Derartige Ventilvorrichtungen weisen jedoch nachteilhafterweise eine hohe Bauteiltoleranzempfindlichkeit auf, da aufgrund der hohen Federraten bereits geringe Änderungen der Bauteilabmessungen erhebliche Änderungen der Federkraft zur Folge haben.

Des Weiteren sind von dem elektromagnetischen Aktuator im Vergleich zu Ventilvorrichtungen mit Federeinrichtungen mit geringer Federrate höhere Magnetkräfte aufzubringen, wodurch der elektromagnetische Aktuator größer zu dimensionieren ist. Derartige Ventilvorrichtungen sind daher durch einen höheren Bauraumbedarf gekennzeichnet, der insbesondere im Automobilbereich nur begrenzt zur Verfügung steht.

Werden die vorbeschriebenen Umschaltventile bzw. Ventilvorrichtungen ohne Federeinrichtung ausgeführt, sind diese gut regelbar. Dies resultiert aus der Tatsache, dass die Ventilvorrichtungen dann bereits bei kleinen Ansteuerströmen reagieren und der Druckverlauf des Systemsdrucks im Wesentlichen proportional zu dem angelegten Ansteuerstrom ist. Die Verwendung derartiger Ventilvorrichtungen verschlechtert jedoch nachteilhafterweise die Evakuierbarkeit und Befüllbarkeit von Bremsdruckregelsystemen, da der Ventilsitz nur bei Vorliegen bestimmter Betriebszustände in der Ventilvorrichtung von dem Ventilelement freigegeben wird.

### Vorteile der Erfindung

Mit der erfindungsgemäßen Ventilvorrichtung mit einem längsbeweglich in einem Ventileinsatz angeordneten und mit einem in einem Ventilkörper ausgebildeten Ventilsitz zusammenwirkenden Ventilelement, das zwischen einer mit einem vollständig geschlossenen Zustand des Ventilsitzes äquivalenten ersten Position und einer mit einem vollständig geöffneten Zustand des Ventilsitzes äquivalenten zweiten Position verschiebbar ist und das in Einbaulage von einer Federeinrichtung mit einer in Öffnungsrichtung des Ventilsitzes wirkenden Kraftkomponente beaufschlagt wird, sowie über einen elektromagnetischen Aktuator in Schließrichtung des Ventilsitzes betätigbar ist, ist ein Systemdruck eines Drucksystems, wie eines Bremsdruckregelsystems, über den gesamten Betriebsdruckbereich, d. h. auch im Niederdruckbereich, auf einfache Art und Weise regelbar, da die erfindungsgemäß ausgeführte Ventilvorrichtung gute Regeleigenschaften im gesamten spezifizierten Druckbereich aufweist und zudem in gewünschter Art und Weise evakuier- und befüllbar ist.

Dies wird dadurch erreicht, dass ein Toleranzbereich der Länge der Federeinrichtung und ein Toleranzbereich der axialen Länge eines Einbauraumes der Federeinrichtung derart aufeinander abgestimmt sind, dass das Ventilelement in unbestromtem Zustand des Aktuators von der Federeinrichtung wenigstens um einen für eine Evakuierung eines Bremsdruckregelsystems, in dessen Entlüftungspfad die erfindungsgemäße Ventilvorrichtung angeordnet sein kann, erforderlichen Mindesthub von dem Ventilsitz abgehoben ist und die Federeinrichtung bei vollständig geöffnetem Ventilsitz einen vorspannungsfreien Zustand aufweist.

Damit ist gewährleistet, dass die Ventilvorrichtung im Niederdruckbereich bereits bei kleinen Steuerströmen regelbar ist und ein Evakuieren und Befüllen eines Bremsdruckregelsystems sichergestellt ist. Diese beiden Anforderungen sind auch dann sichergestellt, wenn die die Funktionalität der Ventilvorrichtung beeinträchtigenden Toleranzgrenzen bezüglich der Bauteilabmessungen der Federeinrichtung und des Einbauraums der Federeinrichtung ungünstigerweise derart aufeinander treffen, dass die Federeinrichtung mit einer maximalen axialen Länge in einem Einbauraum mit einer minimalen axialen Länge vorliegt oder die Länge der Feder minimal und die Einbauraumlänge maximal ist.

Somit ist die gute Regelbarkeit der erfindungsgemäßen Ventilvorrichtung auch dann gewährleistet, wenn die axiale Länge der Federeinrichtung an der oberen Toleranzgrenze liegt und die Abmessungen des Einbauraumes für die Federeinrichtung an der unteren Toleranzgrenze der axialen Länge des Einbauraumes angeordnet ist, da die Federeinrichtung bei dieser Kombination in unbestromtem Zustand der Ventilvorrichtung gerade noch im nicht vorgespannten Zustand im Inneren der Ventilvorrichtung verbaut ist. Dies führt vorteilhafterweise dazu, dass die Federeinrichtung auch bei allen anderen toleranzbedingten Abweichungen der Bauteilabmessungen der Federeinrichtung und des Einbauraumes der Federeinrichtung von einem vorgegeben Maß derart abweicht, dass die Federeinrichtung in stromlosem Zustand der Ventilvorrichtung auf jeden Fall sich in nicht vorgespannter Einbaulage befindet, oder eventuell sogar mit Spiel im Inneren der Ventilvorrichtung angeordnet ist, womit eine Ansteuerung der Ventilvorrichtung ohne Drucksprung, mit harmonischem und zum Ansteuerstrom proportionalem Druckverlauf durchführbar ist.

Zusätzlich ist auch der andere Extremfall, bei dem die Länge der Federeinrichtung an der unteren Toleranzgrenze liegt und die axiale Länge des Einbauraums für die Federeinrichtung im Bereich der oberen Toleranzgrenze angeordnet ist, abgesichert, da das Ventilelement auf jeden Fall federeinrichtungsseitig um einen eine Evakuierung eines Bremsdruckregelsystems sicherstellenden Hubwert von dem Ventilsitz abgehoben ist, so dass das Bremsdruckregelsystem in unbestromtem Zustand der Ventilvorrichtung innerhalb einer definierten Zeitspanne evakuierbar und auch befüllbar ist.

Bei einer vorteilhaften Weiterbildung des Gegenstandes nach der Erfmdung ist die Federeinrichtung mit einer Federrate kleiner als 10 % des Kraftarbeitsbereiches der Ventilvorrichtung ausgeführt, womit die dann mit einer "weichen" Federeinrichtung ausgebildete Ventilvorrichtung durch eine geringe Toleranzempfindlichkeit bezüglich der Bauteilabmessungen gekennzeichnet ist und mit einem einen geringen Bauraum aufweisenden elektromagnetischen Aktuator ansteuerbar ist, da zum Schließen der Ventilvorrichtung nur eine geringe Federkraft zu überwinden ist.

Weitere Vorteile und vorteilhafte Ausgestaltungen des Gegenstandes nach der Erfindung sind der Beschreibung, der Zeichnung und den Patentansprüchen entnehmbar.

### Zeichnung

In der Zeichnung ist ein Ausführungsbeispiel einer erfindungsgemäß ausgebildeten Ventilvorrichtung schematisch vereinfacht dargestellt und wird in der nachfolgenden Beschreibung näher erläutert. Es zeigen:
Figur 1 einen schematisierten Längsschnitt durch eine erfindungsgemäß ausgeführte Ventilvorrichtung;
Figur 2 jeweils eine Strom- und Druck-Kennlinie der in Figur 1 dargestellten Ventilvorrichtung mit vorgespannter Federeinrichtung; und
Figur 3 jeweils eine Strom- und Druck-Kennlinie der Ventilvorrichtung gemäß Figur 1 mit einer in unbestromtem Zustand der Ventilvorrichtung vorspannungsfreien Federeinrichtung.

### Beschreibung des Ausführungsbeispiels

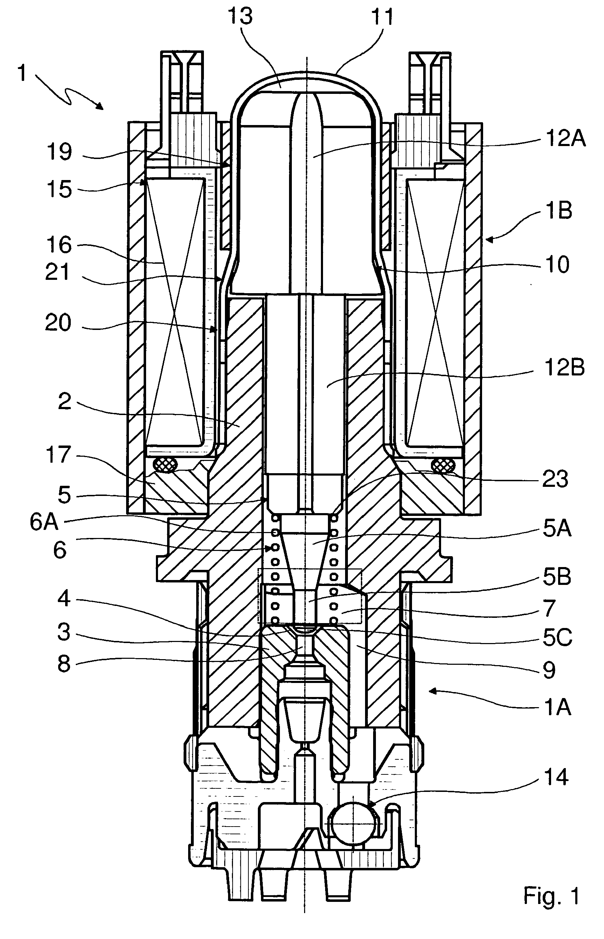

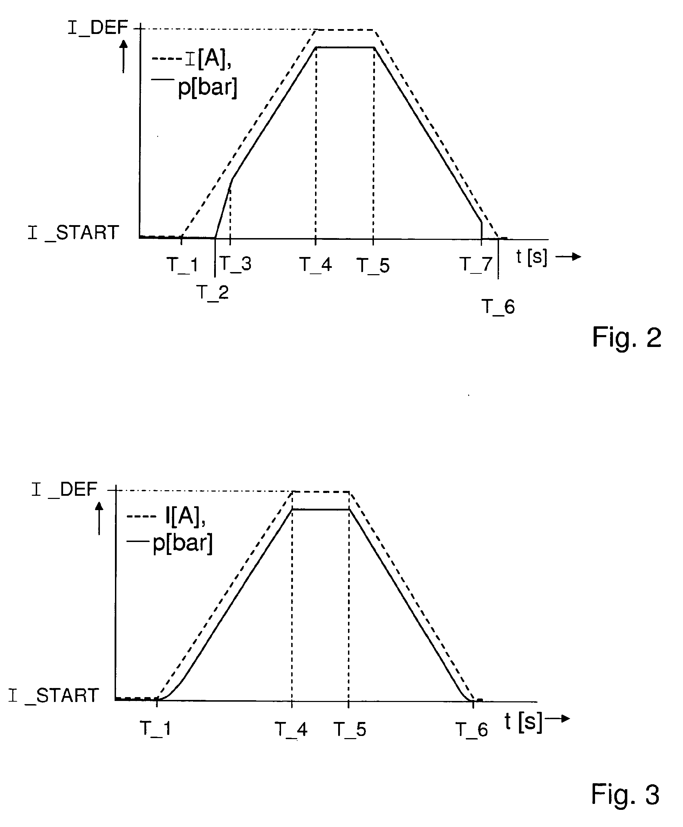

In der Figur 1 ist eine elektromagnetisch betätigbare Ventilvorrichtung 1 gezeigt, die mit einem längsbeweglich in einem Ventileinsatz 2 angeordneten und mit einem in einem Ventilkörper 3 ausgebildeten Ventilsitz 4 zusammenwirkenden Ventilelement 5 ausgebildet ist. Das Ventilelement 5 wird in Einbaulage von einer mit einer in Öffnungsrichtung des Ventilsitzes 4 wirkenden Kraftkomponente beaufschlagt und wird über einen elektromagnetischen Aktuator bzw. ein elektrisches Modul 1B in Schließrichtung des Ventilsitzes 4 betätigt.

Die Federeinrichtung 6 ist vorliegend zwischen dem Ventilelement 5 und dem Ventilkörper 3 angeordnet, wobei die mit einer Schraubenfeder 6A ausgeführte Federeinrichtung 6 in unbestromtem Zustand des elektrischen Moduls 1B vorspannungsfrei zwischen dem Ventilkörper 3 und dem Ventilelement 5 montiert ist und das Ventilelement 5 in der in Figur 1 dargestellten und einem geöffneten Zustand des Ventilsitzes 4 äquivalenten Position hält.

Ein dem Ventilsitz 4 zugewandter Bereich des Ventilelementes 5 ist in einem von dem Ventileinsatz 2 im Bereich des Ventilsitzes 4 begrenzten Ventilraum 7, dessen Abmessungen durch das strichpunktiert ausgeführte Rechteck in der Figur 1 näher gezeigt sind, angeordnet, wobei der in dem Ventilraum 7 angeordnete Bereich des Ventilelementes 5 einen kegelstumpfartigen Bereich 5A, einen sich an den kegelstumpfartigen Bereich 5A anschließenden ersten zylindrischen Bereich 5B und einen sich wiederum an den ersten zylindrischen Bereich 5B anschließenden kugelkappenförmigen dritten Bereich 5C aufweist. Der kugelkappenförmige Bereich 5C des Ventilelementes 5 wirkt mit dem kegelförmig ausgeführten Ventilsitz 4 derart zusammen, dass bei Anlage des Ventilelementes 5 an dem Ventilsitz 4 eine derartige Dichtwirkung vorliegt, dass ein Zuströmbereich 8 des Ventilraumes 7 und ein Abströmbereich 9 des Ventilraumes 7 bei geschlossenem Ventilsitz 4 voneinander getrennt sind.

Die Ventilvorrichtung 1 besteht im Wesentlichen aus dem Hydraulikmodul 1A und dem auf das hydraulische Modul 1A aufgesteckten elektrischen Modul 1B, welches in an sich bekannter Art und Weise mit einer Spule 15, einer elektrischen Wicklung 16 und einer Jochringscheibe 17 ausgeführt ist, um einen Anker 10 des hydraulischen Moduls 1A entgegen der Federkraft der Federeinrichtung 6 in Schließrichtung des Ventilsitzes 4 zu betätigen.

Der Anker 10 ist vorliegend in einem mit dem Ventileinsatz 2 fest verbundenen Ventildom 11 längsbeweglich geführt und begrenzt gemeinsam mit dem Ventildom 11 mehrere Kanäle 12A, die einen zwischen dem Ventildom 11 und dem dem Ventilsitz 4 abgewandten Ende des Ankers 10 begrenzten Ventiltotraum 13 über Stößelnuten 12B des Ventilelementes 5 mit dem Ventilraum 7 verbinden.

Der Ventildom 11 ist über einen gegenüber einem Führungsbereich 19 für den Anker 10 mit vergrößertem Durchmesser ausgeführten Verbindungsbereich 20 mit dem Ventileinsatz 2 fest verbunden. Zwischen dem Führungsbereich 19 und dem Verbindungsbereich 20 ist ein Übergangsbereich 21 vorgesehen, dessen Außendurchmesser ausgehend von dem Führungsbereich 19 in Richtung des Verbindungsbereiches 20 stetig zunimmt.

In unbestromtem Zustand des elektrischen Moduls 1B der Ventilvorrichtung 1 wird das Ventilelement 5 durch die Federkraft der Federeinrichtung 6, die sich an der dem Ventilelement 5 zugewandten Stirnfläche des Ventilkörpers 3 in axialer Richtung abstützt, von dem Ventilsitz 4 weg in Richtung des Ventiltotraumes 13 geschoben, so dass der Anker 10 von dem Ventileinsatz 2 wegbewegt wird. Dabei wird das Ventilelement 5 und damit der Anker 10 in Abhängigkeit der vorliegenden Bauteiltoleranzen der Schraubenfeder 6A und der den Einbauraum der Schraubenfeder 6A begrenzenden Bauteile der Ventilvorrichtung 1 solange in Richtung des dem Ventilsitz 3 abgewandten Endes des Ventildomes 11 im Inneren der Ventilvorrichtung 1 in axialer Richtung verschoben, bis die Federeinrichtung 6 bzw. die Schraubenfeder 6A sich vollständig aus ihrem gestauchten Zustand heraus bewegt hat und im Inneren der Ventilvorrichtung 1 im vorspannungsfreien Zustand vorliegt.

Dabei sind die Toleranzbereiche der Schraubenfeder 6A und der den Einbauraum der Schraubenfeder 6A begrenzenden Bauteile derart aufeinander abgestimmt, dass die Schraubenfeder 6A zumindest dann in unbestromtem Zustand des elektrischen Moduls 1B vorspannungsfrei im Ventileinsatz 2 angeordnet ist, wenn der Anker 10 mit seinem dem Ventilelement 5 abgewandten Ende an der Innenseite des Ventildomes 11 anliegt. Das bedeutet, dass die Schraubenfeder 6A auch bei Aufeinandertreffen einer mit einer maximal möglichen Federlänge ausgeführten Schraubenfeder 6A und einem toleranzbedingt mit minimaler Einbaubaulänge ausgeführten Einbauraum vorspannungsfrei im Inneren der Ventilvorrichtung 1 angeordnet ist.

Gleichzeitig bedeutet dies jedoch auch, dass die Schraubenfeder 6A bei Aufeinandertreffen einer toleranzbedingt mit minimaler Federlänge ausgeführten Schraubenfeder 6A und einem toleranzbedingt mit maximaler Einbauraumlänge ausgeführten Einbauraum bereits vor dem Anliegen des Ankers 10 an dem Ventildom 11 ihren vorspannungsfreien Zustand erreicht.

Bei der in Figur 1 dargestellten Position des Ventilelementes 5 und auch des Ankers 10 ist der Ventilsitz 4 von dem Ventilelement 5 bzw. von dem kugelkappenförmigen Bereich 5C des Ventilelementes 5 freigegeben, der Zuströmbereich 8 mit dem Abströmbereich 9 verbunden und die Schraubenfeder 6A vorspannungsfrei zwischen dem Ventilelement 5 und dem Ventilkörper 3 angeordnet.

Des Weiteren kann in diesem Zustand der Ventilvorrichtung 1 das Betriebsmedium über die Ventilvorrichtung 1, d. h. ausgehend von dem Zuströmbereich 8 des Ventilraumes 7 über den Ventilsitz 4 in den Abströmbereich 9 der Ventilvorrichtung und einem mit dem Abströmbereich 9 verbundenen Bereich eines Druckregelsystems, wie eines ABS-(Antiblockiersystem), eines TCS-(Traktions-Control-System), oder eines ESP-Systems (elektronisches Stabilitätsprogramm), geführt werden.

Zum Schließen des Ventilsitzes 4 wird das in bekannter Art und Weise auf den Ventildom 11 aufgesteckte elektrische Modul 1B der Ventilvorrichtung 1 während einer vorzugsweise pulsweitenmodulierten Ansteuerung derart bestromt, dass das elektrische Modul 1B eine elektromagnetische Kraft erzeugt, die den Anker 10 von seiner in der Figur 1 dargestellten Position in Richtung des Ventilsitzes 4 verschiebt und den kugelkappenformigen Bereich 5C des Ventilelementes 5 bedarfsweise dichtend gegen den Ventilsitz 4 des Ventilkörpers 6 drückt, dass die Ventilvorrichtung 1 entgegen der Federkraft der Federeinrichtung 6 und eventueller an dem Ventilelement 5 in Öffnungsrichtung des Ventilsitzes 3 angreifenden Hydraulikkräfte geschlossen ist. In diesem Zustand der Ventilvorrichtung 1 ist der Zuströmbereich 8 von dem Abströmbereich 9 getrennt und es kann kein Betriebsmedium über die Ventilvorrichtung 1 geführt werden, falls zwischen dem Zuströmbereich 8 und dem Abströmbereich 9 ein positives Druckgefälle vorliegt. Vorliegend ist im Inneren der Ventilvorrichtung 1 ein positives Druckgefälle vorhanden, wenn der Druck im Zuströmbereich 8 größer als der Druck im Abströmbereich 9 der Ventilvorrichtung 1 ist.

Dies resultiert aus der Tatsache, dass der Zuströmbereich 8 bei positivem Druckgefälle gegenüber dem Abströmbereich 9 durch ein Rückschlagventil 14 von dem Abströmbereich 9 getrennt ist, wobei das Rückschlagventil 14 bei negativem Druckgefälle, das bedeutet bei Vorliegen eines Drucks in dem Abströmbereich 9, der größer als der Druck des Zuströmbereichs 8 ist, geöffnet ist.

Darüber hinaus ist die Ventilvorrichtung 1 über das elektrische Modul 1B derart ansteuerbar, dass das Ventilelement 5 in verschiedenen Zwischenstellungen in Abhängigkeit eines einzustellenden Arbeitspunktes der Ventileinrichtung 1 positionierbar ist.

Bei der in Figur 1 dargestellten Ventilvorrichtung 1 ist die Federeinrichtung 6 mit ihrem dem Ventilkörper 3 zugewandten Bereich im Ventilraum 7 angeordnet, der bei geöffnetem Ventilsitz 4 ausgehend von dem Zuströmbereich 8 von Fluid - beim Einsatz der Ventilvorrichtung 1 in einem ABS-System eines Kraftfahrzeuges von Bremsflüssigkeit - in Richtung des Abströmbereiches 9 durchströmt wird.

Die vorbeschriebene Ausgestaltung der Ventilvorrichtung 1 mit den aufeinander abgestimmten Toleranzbereichen der Federeinrichtung 6 und der den Einbauraum im Inneren der Ventilvorrichtung 1 begrenzenden Bauteile führt dazu, dass die Ventilvorrichtung 1 sowie die mit dem Zuströmbereich 8 bzw. dem Abströmbereich 9 verbundenen Bereiche eines Druckregelsystems in unbestromtem Zustand des elektrischen Moduls 1B durch den sicher geöffneten Ventilsitz 3 auf einfache Art und Weise evakuierbar sind und zudem während einer Befiillphase sicher befüllt werden können.

Dabei sind die Toleranzbereiche derart aufeinander abgestimmt, dass das Ventilelement 5 in unbestromtem Zustand des elektrischen Moduls 1B von der Federeinrichtung 6 um einen Mindesthubwert aus dem Ventilsitz 3 gehoben wird, der für eine Evakuierbarkeit und eine Befüllbarkeit der Ventilvorrichtung 1 und der damit verbundenen Bereiche eines Druckregelsystems innerhalb einer vordefmierten Zeit gewährleistet ist.

In Figur 2 ist ein Verlauf eines Ansteuerstromes I des elektrischen Moduls 1B und ein damit korrespondierender Verlauf des Systemdrucks p über der Zeit t der in Figur 1 dargestellten Ventilvorrichtung 1 gezeigt, wobei sich der Verlauf des Systemsdrucks p in Abhängigkeit des Ansteuerstroms I ein-stellt, wenn die Federeinrichtung 6 auch bei vollständig geöffnetem Ventilsitz 6, d. h. bei maximal möglichem Öffnungshub des Ventilelementes 5, in vorgespanntem Zustand zwischen dem Ventilkörper 3 und dem Ventilelement 5 angeordnet ist.

Zu einem Zeitpunkt T_1 wird der Ansteuerstrom I, dessen Verlauf durch die strichliert ausgeführte Linie dargestellt ist, gemäß einer Rampenfunktion ausgehend von einem Startwert I_START linear in Richtung eines definierten Stromwertes I_DEF angehoben, wobei der Systemdruck p, dessen Verlauf durch die durchgezogene Linie graphisch wiedergegeben ist, erst zu einem Zeitpunkt T_2 bis zu einem weiteren Zeitpunkt T_3 sprungartig ansteigt. Anschließend steigt der Systemdruck p nahezu proportional mit dem Ansteuerstrom I der Ventilvorrichtung 1 bis zum Zeitpunkt T_4 an. Mit Erreichen des definierten Ansteuerstromwertes I_DEF wird der Ansteuerstrom I bis zum Zeitpunkt T_5 wenigstens annähernd konstant gehalten, bevor er in der in Figur 2 dargestellten Art und Weise über eine Stromrampe bis zum Zeitpunkt T_6 wieder auf den zum Zeitpunkt T_1 vorliegenden Startwert I_START abgesenkt wird.

Der Verlauf des Systemdrucks p weist bis zu einem Zeitpunkt T_7 ein zu dem Ansteuerstrom I proportionales Verhalten auf. Erst zum Zeitpunkt T_7 fällt der Systemdruck p sprungartig auf den Wert zum Zeitpunkt T_2 ab.

Das bedeutet, dass der Verlauf des Systemdrucks p zu Beginn der Ansteuerung und am Ende der Ansteuerphase von dem Verlauf des Ansteuerstromes I derart abweicht, dass eine Regelbarkeit der Ventilvorrichtung 1 nur in unzureichendem Umfang durchführbar ist.

Der sprunghafte Anstieg des Verlaufs des Systemdrucks p zum Zeitpunkt T_2 und der sprungartige Abfall zum Zeitpunkt T_7 resultieren aus der auch in vollständig geöffnetem Zustand der Ventilvorrichtung 1 bzw. des Ventilsitzes 4 vorliegenden Vorspannung der Federeinrichtung 6. Die Magnetkraft des elektromagnetischen Aktuators bzw. des elektrischen Moduls 1B ist bei den zu Beginn und am Ende der Ansteuerphase der Ventilvorrichtung 1 vorliegenden Ansteuerstromwerten zu klein, weshalb die in Schließrichtung des Ventilsitzes 4 wirkende Magnetkraft zu den Zeitpunkten T_2 und T_7 von der der Federvorspannung entsprechenden Federkraft überwunden wird. Das Ventilelement 5 wird in diesen Ansteuerbereichen sprungartig und nicht proportional zu dem anliegenden Ansteuerstrom I bewegt, so dass im Niederdruckbereich der Ventilvorrichtung 1 eine schlechte Regelbarkeit der Ventilvorrichtung 1 vorliegt.

In Figur 3 sind die in Figur 2 gezeigten Verläufe des Ansteuerstromes I und des Systemdruckes p für die in Figur 1 gezeigte Ventilvorrichtung 1 graphisch wiedergegeben, die jedoch mit einer in unbestromtem Zustand des elektrischen Moduls 1B vorspannungsfrei im Inneren der Ventilvorrichtung 1 angeordneten Federeinrichtung 6 ausgeführt ist.

Der direkte Vergleich der in Figur 2 und in Figur 3 dargestellten Kennlinien zeigt die Vorteile einer in unbestromtem Zustand der Ventilvorrichtung 1 vorspannungsfreien Federeinrichtung 6, da der Verlauf des Systemsdrucks p gemäß Figur 3 über die gesamte Ansteuerphase der Ventilvorrichtung 1 ein zu dem Verlauf des Ansteuerstroms I proportionales Verhalten aufweist. Lediglich zu Beginn und am Ende der Ansteuerphase weicht der Verlauf des Systemdrucks p von der Proportionalität ab, wobei der wenigstens annähernd parabelförmige Anstieg zu Beginn und das wenigstens annähernd parabelförmige Absenken des Systemdrucks p am Ende der Ansteuerphase der Ventilvorrichtung 1 mit vorspannungsfreier Federeinrichtung 6 Grundlage für eine besonders gute Regelbarkeit im Niederdruckbereich der Ventilvorrichtung 1 ist.

Selbstverständlich liegt es im Ermessen des Fachmannes, die im Bereich zwischen dem Ventilkörper 3 und dem Ventilelement 5 angeordnete Schraubenfeder 6A auch zwischen dem Ventileinsatz 2 und dem Ventilelement 5 anzuordnen, um eine Evakuierbarkeit und eine Befüllbarkeit der Ventilvorrichtung 1 in unbestromtem Zustand des elektrischen Moduls 1B zu gewährleisten.

Die Federeinrichtung 6 kann mit Federraten, welche etwa 50 % des Arbeitskraftbereiches der Ventilvorrichtung 1, der vorliegend bei etwa 20 N angeordnet ist, betragen, wobei dann höhere Anforderungen an die Bauteiltoleranzen der Ventilvorrichtung 1 gestellt werden müssen, da bereits geringe Unterschiede der Bauteilabmessungen größere Abweichungen bei der im Betrieb wirkenden Federkraft hervorrufen.

Deshalb sind Federraten, welche kleiner als 50 % des Arbeitskraftbereiches der Ventilvorrichtung 1 sind, hinsichtlich einer Toleranzempfmdlichkeit der Ventilvorrichtung geeigneter, da geringere Anforderungen an die Bauteiltoleranzen zu stellen sind, was sich wiederum positiv auf die Fertigungskosten auswirkt.

## Patentansprüche

1. Ventilvorrichtung (1) mit einem längsbeweglich in einem Ventileinsatz (2) angeordneten und mit einem in einem Ventilkörper (3) ausgebildeten Ventilsitz (4) zusammenwirkenden Ventilelement (5), das zwischen einer mit einem vollständig geschlossenen Zustand des Ventilsitzes (4) äquivalenten ersten Position und einer mit einem vollständig geöffneten Zustand des Ventilsitzes (4) äquivalenten zweiten Position verschiebbar ist und das in Einbaulage von einer Federeinrichtung (6) mit einer in Öffnungsrichtung des Ventilsitzes (4) wirkenden Kraftkomponente beaufschlagt wird sowie über einen elektromagnetischen Aktuator (1B) in Schließrichtung des Ventilsitzes (4) betätigbar ist, wobei ein Toleranzbereich der Länge der Federeinrichtung (6) und ein Toleranzbereich der axialen Länge eines Einbauraums der Federeinrichtung (6) derart aufeinander abgestimmt sind, dass das Ventilelement (5) in unbestromtem Zustand des Aktuators (1B) von der Federeinrichtung (6) wenigstens um einen für eine Evakuierung erforderlichen Mindesthub von dem Ventilsitz (4) abgehoben ist, **dadurch gekennzeichnet, dass** die Federeinrichtung (6) bei vollständig geöffnetem Ventilsitz (4) einen vorspannungsfreien Zustand aufweist.

2. Ventilvorrichtung nach Anspruch 1, **dadurch gekennzeichnet, dass** eine Federrate der Federeinrichtung (6) kleiner als 50 % des Kraftarbeitsbereichs ist.

3. Ventilvorrichtung nach Anspruch 1 oder 2, **dadurch gekennzeichnet, dass** eine Federrate der Federeinrichtung kleiner als 10 % des Kraflarbeitsbereichs ist.

4. Ventilvorrichtung nach einem der Ansprüche 1 bis 3, **dadurch gekennzeichnet, dass** eine Systemdruckeinstellung über eine putsweitenmodulierte. Ansteuerung des elektromagnetischen Aktuators (1B) durchführbar ist.

5. Ventilvorrichtung nach einem der Ansprüche 1 bis 4, **dadurch gekennzeichnet, dass** die Federeinrichtung (6) eine Schraubenfeder (6A) umfasst.

6. Ventilvorrichtung nach Anspruch 5, **dadurch gekennzeichnet, dass** die Schraubenfeder (6A) zwischen dem den Ventilsitz (4) aufweisenden Ventilkörper (3) und einer dem Ventilkörper (3) zugewandten Stirnfläche des Ventilelementes (5) angeordnet ist.

## Claims

1. Valve device (1) having a valve element (5) which is arranged so as to be longitudinally moveable in a valve insert (2), interacts with a valve seat (4) formed in a valve body (3), can be displaced between a first position equivalent to a completely closed state of the valve seat (4) and a second position equivalent to a completely open state of the valve seat (4), is acted on in the installed position by a spring device (6) with a force component acting in the opening direction of the valve seat (4), and can be actuated in the closing direction of the valve seat (4) by means of an electromagnetic actuator (1B), with a tolerance range of the length of the spring device (6) and a tolerance range of the axial length of an installation space for the spring device (6) being matched to one another in such a way that, in the currentless state of the actuator (1B), the valve element (5) is raised from the valve seat (4) by the spring device (6) by at least a minimum degree of lift required for an evacuation, **characterized in that**, when the valve seat (4) is completely open, the spring device (6) is in a state without preload.

2. Valve device according to Claim 1, **characterized in that** a spring rate of the spring device (6) is less than 50 % of the force working range.

3. Valve device according to Claim 1 or 2, **characterized in that** a spring rate of the spring device is less than 10 % of the force working range.

4. Valve device according to one of Claims 1 to 3, **characterized in that** a system pressure adjustment can be carried out by means of a pulse width modulated actuation of the electromagnetic actuator (1B).

5. Valve device according to one of Claims 1 to 4, **characterized in that** the spring device (6) comprises a helical spring (6A).

6. Valve device according to Claim 5, **characterized in that** the helical spring (6A) is arranged between the valve body (3), which has the valve seat (4), and an end face, which faces towards the valve body (3), of the valve element (5).

## Revendications

1. Dispositif de soupape (1) comprenant un élément de soupape (5) mobile longitudinalement dans un insert de soupape (2) et coopérant avec un siège de soupape (4) formé dans un corps de soupape (3), l'élément de soupape mobile, entre une première position équivalente à un état complètement fermé du siège de soupape (4) et une deuxième position équivalente à un état complètement ouvert du siège de soupape (4), étant sollicité dans la position de montage, par un dispositif de ressort (6) avec une composante de force agissant dans la direction d'ouverture du siège de soupape (4) en étant actionné par un actionneur électromagnétique (1B) dans la direction de fermeture du siège de soupape (4), avec une plage de tolérance de la longueur du dispositif de ressort (6) et une plage de tolérance de la longueur axiale d'un espace de montage du dispositif de ressort (6) adaptées l'une à l'autre de telle sorte que l'élément de soupape (5), dans l'état non alimenté de l'actionneur (1B), est soulevé du siège de soupape (4) par le dispositif de ressort (6) au moins d'une course minimum nécessaire à une évacuation,
**caractérisé en ce que**
le dispositif de ressort (6), lorsque le siège de soupape (4) est complètement ouvert, présente un état exempt de précontrainte.

2. Dispositif de soupape selon la revendication 1,
**caractérisé en ce qu'**
un facteur de rappel du dispositif de ressort (6) est inférieur à 50 % de la plage de travail de la force.

3. Dispositif de soupape selon la revendication 1 ou 2,
**caractérisé en ce qu'**
un facteur de rappel du dispositif de ressort est inférieur à 10 % de la plage de travail de la force.

4. Dispositif de soupape selon l'une des revendications 1 à 3,
**caractérisé en ce qu'**
un réglage de la pression du système peut être réalisé par une commande modulée en largeur d'impulsion de l'actionneur électromagnétique (1B).

5. Dispositif de soupape selon l'une des revendications 1 à 4,
**caractérisé en ce que**
le dispositif de ressort (6) comprend un ressort hélicoïdal (6A).

6. Dispositif de soupape selon la revendication 5,
**caractérisé en ce que**
le ressort hélicoïdal (6A) est disposé entre le corps de soupape (3) tourné vers le siège de soupape (4) et une surface frontale de l'élément de soupape (5) tournée vers le corps de soupape (3).
